(19) Europäisches Patentamt
European Patent Office
Office européen des brevets

(11) EP 1 917 309 B1

(12) **FASCICULE DE BREVET EUROPEEN**

(45) Date de publication et mention de la délivrance du brevet:
**11.11.2015 Bulletin 2015/46**

(21) Numéro de dépôt: **06778047.8**

(22) Date de dépôt: **28.07.2006**

(51) Int Cl.:
***C08K 5/25*** *(2006.01)* ***C08L 95/00*** *(2006.01)*
***C10C 3/02*** *(2006.01)* ***C10C 3/04*** *(2006.01)*

(86) Numéro de dépôt international:
**PCT/EP2006/064777**

(87) Numéro de publication internationale:
**WO 2007/012665 (01.02.2007 Gazette 2007/05)**

(54) **PROCEDE DE PREPARATION DE BASE BITUME**

VERFAHREN ZUR HERSTELLUNG EINER BITUMENGRUNDLAGE

METHOD FOR PREPARING BITUMEN BASE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **28.07.2005 FR 0552366**

(43) Date de publication de la demande:
**07.05.2008 Bulletin 2008/19**

(73) Titulaire: **TOTAL MARKETING SERVICES**
**92800 Puteaux (FR)**

(72) Inventeurs:
- **LAPALU, Laurence**
**F-69100 Villeurbanne (FR)**
- **VINCENT, Régis**
**F-69520 Grigny (FR)**

(74) Mandataire: **Cabinet Plasseraud**
**52, rue de la Victoire**
**75440 Paris Cedex 09 (FR)**

(56) Documents cités:
**EP-A- 0 040 319**
**WO-A-02/26889**
**GB-A- 836 543**
**US-A- 4 440 886**
**US-A- 4 755 545**
**US-A- 5 326 798**
**US-A1- 2002 081 924**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 917 309 B1

## Description

### DOMAINE DE L'INVENTION

La présente invention se rapporte au domaine de la préparation de bases bitumes. Plus précisément, elle concerne la préparation d'une base bitume présentant certaines caractéristiques d'un bitume soufflé, à l'aide d'un additif organique, par opposition au soufflage par injection d'un gaz, comme de l'air ou de l'ozone.

### CONTEXTE TECHNIQUE

Les bitumes soufflés sont une famille particulière de bases bitumineuses disponibles en raffinerie, qui sont utilisées en raison de leurs propriétés pour la préparation de produits commerciaux. Les bitumes soufflés sont fabriqués dans une unité de soufflage, en faisant passer un flux d'air et/ou d'oxygène à travers une base bitumineuse de départ. Cette opération peut être menée en présence d'un catalyseur d'oxydation, par exemple de l'acide phosphorique. Généralement, le soufflage est réalisé à des températures élevées, de l'ordre de 200 à 300°C, pendant des durées relativement longues typiquement comprises entre 30 minutes et 2 heures, en continu ou en batch. La durée et la température de soufflage sont ajustées en fonction des propriétés visées pour le bitume soufflé et en fonction de la qualité du bitume de départ.

Le principal objectif du soufflage d'un bitume est de diminuer sa susceptibilité thermique, c'est à dire augmenter l'indice de pénétrabilité (ou indice Pfeiffer) du bitume soufflé par rapport au bitume de départ. L'opération de soufflage a pour effet de durcir le bitume traité par oxydation. Un bitume soufflé possède une température de ramollissement bille et anneau (TBA) supérieure à celle du bitume de départ et une pénétrabilité à l'aiguille ($P_{25}$) du même ordre de grandeur que celle du bitume de départ.

Pour mémoire, plus la pénétrabilité à l'aiguille d'un bitume est élevée, meilleure est sa maniabilité et plus sa mise en oeuvre est aisée. De plus, les risques d'orniérage à la température de service d'un bitume donné sont plus faibles lorsque la TBA du bitume augmente.

Les bitumes soufflés ont été beaucoup utilisés dans les années 70 car ils possèdent une TBA supérieure à celle des bitumes de départ tout en conservant une pénétrabilité à l'aiguille satisfaisante. Ainsi, l'indice de pénétrabilité des bitumes soufflés se trouve amélioré par rapport à celui des bitumes de départ.

Cependant, les bitumes soufflés présentent une série d'inconvénients en raison desquels ils sont moins utilisés qu'auparavant. Tout d'abord, les bitumes soufflés sont plus sensibles au vieillissement que les bitumes de départ.

Par ailleurs, les bitumes soufflés sont généralement plus fragiles à froid que le bitume de départ. Cela peut s'expliquer par le fait que le soufflage a pour effet de durcir le bitume.

Un autre inconvénient des bitumes soufflés est leur adhésivité parfois inadéquate aux granulats : la réalisation d'enrobés bitumineux ou d'autres types d'associations bitume/granulats, est donc rendue plus difficile.

Enfin, les bitumes soufflés étant durcis par rapport au bitume de départ, leur viscosité à une température donnée est supérieure à celle du bitume de départ. Aussi, pour pouvoir mettre en oeuvre facilement un bitume soufflé, il est nécessaire de le porter à des températures supérieures, ce qui implique des dépenses énergétiques supplémentaires, la nécessité éventuelle de protections supplémentaires pour les opérateurs, et le risque de l'émission de fumées gênantes.

Par ailleurs, comme on l'a souligné ci-dessus, la fabrication de bitume soufflé nécessite une installation de soufflage spécialement prévue à cet effet.

La demande internationale de brevet WO 02/26889 A1 concerne une composition de bitume modifié par un polymère élastomère, par exemple un SBS, contenant en outre un additif tel que l'IRGANOX © MD-1024, l'IRGANOX © 1098, l'IRGANOX © 259 ou le NAUGARD XL-1.

Les exemples de mise en oeuvre illustrent une composition à base d'un bitume de grade 160/210, d'un élastomère SBS, d'une charge (30% en poids) et d'IRGANOX © MD-1024. Comme le montrent ces exemples, la pénétrabilité à 50°C de ces compositions diminue par rapport à celle d'une composition témoin exemple d'IRGANOX © MD-1024. Cela signifie donc que les compositions visées sont plus dures à 50°C.

En revanche, on constate également que la viscosité à 180°C des compositions bitume-polymère visées est supérieures à celle de la composition témoin. Cela dénote donc que la mise en oeuvre de ces compositions est plus difficile que la mise en oeuvre de la composition témoin. En d'autres termes, pour atteindre une viscosité voulue pour la mise en oeuvre des compositions visées, il sera nécessaire de les chauffer à une température supérieure à la température nécessaire pour atteindre la même viscosité avec la composition témoin.

Cela va à l'encontre des objectifs d'économie d'énergie, de diminution des températures de mise en oeuvre, de réduction des émissions de fumées sur les chantiers et de protection des ouvriers.

La demande US 4 440 886 A décrit des compositions bitumineuses stabilisées contre des accroissements de viscosité à température élevée à l'aide de petites quantités de nitrite de sodium, éventuellement complétées par de

l'IRGANOX 1035.

Le brevet US4755545 décrit une composition utilisée comme revêtement de toiture comprenant : a) 50 à 95% en poids d'un composant bitumineux, ce composant étant un asphalte routier ou un mélange d'asphalte routier et d'asphalte à base de résine dure, et b) 1 à 6% en poids d'un polymère thermoplastique de styrène et butadiène.

## BREVE DESCRIPTION DE L'INVENTION

Un objectif de l'invention est de proposer un procédé de préparation d'une base bitume qui pallie les inconvénients précités d'un bitume soufflé. En particulier, un objectif de l'invention est de proposer un procédé de préparation d'une base bitume qui présente une faible susceptibilité thermique, voire une susceptibilité thermique améliorée par rapport à celle d'un bitume soufflé selon la méthode usuelle. Il s'agit notamment d'obtenir une base bitume dont la température de ramollissement bille et anneau est supérieure à celle d'un bitume soufflé obtenu à partir d'un même bitume de départ, et/ou dont la pénétrabilité à l'aiguille est inférieure à celle d'un bitume soufflé obtenu à partir d'un même bitume de départ. On peut donc évoquer la notion de soufflage chimique.

Un autre objectif de l'invention est de proposer un procédé de préparation d'une base bitume à partir d'un bitume de commodité, sans qu'il soit préalablement nécessaire de modifier le bitume de départ, par exemple à l'aide d'un fluxant, ce procédé permettant d'obtenir une base bitume de grade (pénétrabilité à l'aiguille) et de température de ramollissement bille et anneau visés.

Un autre objectif de l'invention est de proposer un procédé de préparation d'une base bitume dont le grade et la TBA sont atteints à ce jour essentiellement par l'adjonction d'un polymère.

Un objectif complémentaire de l'invention est de proposer un procédé de préparation d'une base bitume qui permet d'obtenir un bitume plus résistant au vieillissement qu'un bitume soufflé usuel.

Un objectif supplémentaire de l'invention est de proposer un procédé de préparation d'une base bitume qui permet d'obtenir un bitume moins fragile qu'un bitume soufflé usuel.

Un autre objectif de l'invention est de proposer un procédé de préparation d'une base bitume qui permet d'obtenir un bitume présentant une bonne adhésivité aux granulats, comparable à l'adhésivité d'un bitume non soufflé.

Encore un objectif de l'invention est de proposer un procédé de préparation d'une base bitume qui permet d'obtenir un bitume dont la viscosité à chaud est comparable à celle du bitume de départ.

Un objectif supplémentaire de l'invention est de proposer un procédé de préparation d'une base bitume durcie aux températures d'usage et qui conserve une maniabilité à chaud comparable à celle du bitume de départ.

Ainsi, il est du mérite des inventeurs d'avoir pu démontrer que l'addition de certains additifs organiques dans un bitume permet de résoudre les problèmes évoqués ci-dessus et de remplir les objectifs de l'invention. De tels additifs organiques permettent d'obtenir, à partir d'un bitume de départ donné, une base bitume présentant les caractéristiques principales d'un bitumes soufflé (augmentation de la TBA et diminution de la pénétrabilité à l'aiguille par rapport au bitume de départ), sans les inconvénients d'un bitume soufflé. Par exemple, une base bitume obtenue conformément à l'invention présente une meilleure résistance au vieillissement par rapport à un bitume soufflé usuel, et une fragilité à froid et une viscosité à chaud comparables à celles du bitume de départ.

## BREVE DESCRIPTION DES FIGURES

La figure 1 représente l'évolution de la température de ramollissement bille et anneau (TBA) en °C, pour deux grades de bitumes, en fonction de la teneur en additif de soufflage chimique, exprimée en % en poids par rapport au poids de bitume.

La figure 2 représente l'évolution des deux principales caractéristique d'un bitume, la température de ramollissement bille et anneau (TBA) en °C et la pénétrabilité à 25°C, pour deux grades de bitumes, à la suite de l'ajout de 1% en poids d'additif de soufflage chimique.

## DESCRIPTION DETAILLEE DE L'INVENTION

On définit trois plages de températures :

- températures de fabrication : températures auxquelles doit être chauffée le bitume pour préparer la composition bitumineuse, c'est-à-dire par exemple le mélange avec divers additifs, avec des charges, avec des granulats, éventuellement la mise en émulsion,
- températures de mise en oeuvre : températures d'application de la composition bitumineuse sur un support, lors de la faprication d'un produit fini (couche routière, film d'étanchéité),

- températures d'usage : températures ambiantes auxquelles le produit fini peut être exposé au cours du temps.

Les inventeurs ont mis au point un procédé qui permet d'obtenir une base bitume durcie aux températures d'usage, tout en conservant des températures de fabrication et de mise en oeuvre comparables à celles du bitume de départ. Ainsi, la base bitume selon l'invention conserve une bonne maniabilité à chaud. Au contraire, la maniabilité à chaud d'un bitume soufflé classique est inférieure à celle d'un bitume non soufflé, notamment en raison de l'augmentation de la viscosité à chaud.

Il est décrit un procédé de préparation d'une base bitume, comprenant les étapes essentielles suivantes :

a) on introduit un bitume dans un récipient équipé de moyens de mélange, et on porte le bitume à une température de 120°C à 300°C,
b) on introduit au moins un additif de soufflage chimique dans le récipient, et on mélange, ledit additif de soufflage chimique possédant la formule générale suivante :

Ar1-R-Ar2 (I)

où Ar1 et Ar2 représentent indépendamment l'un de l'autre un noyau benzène ou un système de noyaux aromatiques condensés de 6 à 20 atomes de carbones, substitués par au moins un groupe hydroxyle, et R représente un radical divalent éventuellement substitué, dont la chaîne principale comprend de 6 à 20 atomes de carbone et au moins un groupe amide et/ou ester ; l'additif de soufflage représentant de 0,4 à 5,0 % en poids rapporté au poids de bitume non modifié, et dans lequel cette préparation s'effectuant sans adjonction de polymère,

Un objet de l'invention est un procédé de préparation d'une base bitume selon la revendication 1, la base bitume obtenue présentant une pénétrabilité à l'aiguille à 25°C ($P_{25}$), mesurée selon la norme NF EN 1426, comprise entre 20 et 300 dixièmes de millimètre, et plus particulièrement entre 50 et 300 dixièmes de millimètre, et une température de ramollissement bille et anneau (TBA), mesurée selon la norme NF EN 1427, comprise entre 70 et 120°C.

L'invention concerne également une base bitume susceptible d'être obtenue par un tel procédé.

En outre, l'invention vise l'utilisation d'une base bitume ainsi obtenue dans la préparation d'un liant bitumineux, en particulier une émulsion bitumineuse, un bitume fluxé ou un bitume polymère.

L'invention concerne également l'utilisation d'une base bitume obtenue à l'issu de ce procédé, d'une part dans la préparation d'une association entre un liant bitumineux et des granulats routiers, et d'autre part dans des applications industrielles.

L'invention vise par ailleurs des associations entre un liant bitumineux comprenant un bitume selon l'invention et des granulats routiers, en tant que tels.

Finalement, l'invention concerne l'utilisation d'un composé de formule générale (I) telle que définit ci-dessus, comme additif de soufflage chimique pour préparer une base bitume, en particulier à partir d'un bitume de commodité.

On appelle "bitume soufflé" une base bitumineuse obtenue à l'issue d'une opération de soufflage usuel. Le soufflage est réalisé en faisant circuler de l'air et/ou de l'oxygène à travers un bitume de départ. Cela conduit à la déshydrogénation des résidus courts présents dans le bitume de départ. Il en résulte une oxydation et une polycondensation, notamment à partir des maltènes. Ainsi, de nouveaux asphaltènes sont formés et la taille moléculaire globale des asphaltènes présents dans le bitume de départ augmente.

Comme cela a été évoqué précédemment, un bitume soufflé est plus dur que le bitume de départ à partir duquel il a été fabriqué. En outre, les bitumes soufflés ont une susceptibilité thermique inférieure à celle du bitume de départ. En d'autres termes, leur indice de pénétrabilité est supérieur à celui du bitume de départ. Cela est associé notamment à une TBA supérieure, et à une pénétrabilité à l'aiguille inférieure, à celle du bitume de départ.

Dans la présente demande, on désigne par "bitume de type soufflé" une base bitume possédant des caractéristiques semblables à celle d'un bitume soufflé, en ce sens que la TBA et la pénétrabilité à l'aiguille d'un bitume de type soufflé sont respectivement supérieures et inférieures à celle du bitume de départ utilisé lors de la fabrication du bitume de type soufflé. Cependant, une telle base bitume, conformément à l'invention, n'est pas obtenue par un procédé de soufflage usuel à l'air ou à l'oxygène.

Le bitume est un produit lourd pouvant être issu de différentes origines. Parmi les bases bitume utilisables selon l'invention, on entend les bitumes naturels, ou les bitumes provenant d'une huile minérale. Les bases bitumes sont généralement utilisées telles quelles (bitumes purs) seules et/ou en mélanges entre bases d'origines différentes. On peut également envisager d'utiliser les bases bitume sous forme fluidifiée, fluxée et/ou oxydée, y compris soufflée classiquement, ainsi que des mélanges de ces différentes formes éventuellement avec des bitumes purs. De préférence, on utilise des bitumes naturels ou des bitumes provenant d'une huile minérale tels quels, ou en mélange.

Les brais obtenus par craquage ou les goudrons peuvent être utilisés comme base bitumineuse, ainsi que des mélanges de composants bitumineux. Comme exemple intéressant de base bitumineuse, on peut citer les bitumes de

distillation directe, les bitumes de précipitation, les bitumes de résidus de désasphaltage, de viscoréduction, les bitumes synthétiques, les asphaltes naturels, seuls ou en mélange, dont la pénétrabilité à l'aiguille $P_{25}$ varie de 10 à 900 1/10 mm, en particulier de 20 à 280 1/10 mm et plus particulièrement de 50 à 250 1/10 mm.

Par "bitume de commodité", on désigne un bitume de grade classique, tel que défini dans la norme européenne EN 12591.

Dans toute la présente demande, les propriétés suivantes des bitumes sont mesurées comme indiqué dans le tableau 1 ci-dessous :

TABLEAU 1

| **Propriété** | **Abréviation** | **Unité** | **Norme de mesure** |
|---|---|---|---|
| Pénétrabilité à l'aiguille à 25°C | $P_{25}$ | 1/10mm | NF EN 1426 |
| Température de ramollissement bille et anneau | TBA | °C | NF EN 1427 |
| Point de fragilité Fraass | PFF | °C | EN 12593 |
| Test de vieillissement "Rolling Thin Film Oven Test" | RTFOT | - | EN 12607-1 |
| Viscosité Brookfield | - | mPa.s | Cf. exemples |
| Adhésivité passive | - | % | EN 13614 |
| Module complexe | G* | Pa | Cf. exemples |

En outre, l'indice de pénétrabilité PI (ou indice de Pfeiffer) est défini par la formule de calcul suivante :

$$PI = \frac{1952 - 500 \times \log(P_{25}) - 20 \times TBA}{50 \times \log(P_{25}) - TBA - 120}$$

Le procédé selon l'invention permet notamment d'obtenir une base bitume susceptible d'être utilisée de façon similaire à un bitume soufflé, dans diverses applications routières et industrielles.

Ainsi, pour les applications routières, on vise notamment des enrobés bitumineux comme matériaux pour la construction et l'entretien des corps de chaussée et de leur revêtement, ainsi que pour la réalisation de tous travaux de voiries. Ainsi, l'invention concerne par exemple les enduits superficiels, les enrobés à chaud, les enrobés à froid, les enrobés coulés à froid, les graves émulsions, les couches de bases, de liaison, d'accrochage et de roulement, et d'autres associations d'un liant bitumineux et du granulat routier possédant des propriétés particulières, telles que les couches anti-omiérantes, les enrobés drainants, ou les asphaltes (mélange entre un liant bitumineux et une charge minérale fine telle que du sable).

Les liants bitumineux en tant que tels, utilisés notamment dans les applications routières, sont également visés. Ces liants comprennent une base bitume conforme à l'invention. Il s'agit par exemple de bitume fluxé ou d'émulsion bitumineuse.

Parmi les applications industrielles des bases bitumes selon l'invention, on peut citer la fabrication de membranes d'étanchéité, de membrane anti-bruit, de membranes d'isolation, des revêtements de surface, les dalles de moquette, les couches d'imprégnation, etc....

Lors de la mise en oeuvre du procédé de préparation selon l'invention, on peut utiliser divers types de bitume. Par définition selon l'invention, on utilise un bitume non modifié comme bitume de départ, c'est-à-dire un bitume qui ne contient pas de polymère.

L'ajout d'un additif de soufflage chimique dans le bitume ou le mélange de bitumes, porté à haute température, permet d'obtenir une base bitume selon l'invention. Comme cela sera illustré par les exemples, l'additif de soufflage chimique agit rapidement au sein de la matrice bitumineuse, à de faible teneur, à des température réduite et sans dégagement nocif.

Plus précisément, l'additif de soufflage chimique est un composé organique de formule générale (I) :

Ar1-R-Ar2 (I)

où Ar1 et Ar2 représentent indépendamment l'un de l'autre un noyau benzène ou un système de noyaux aromatiques condensés de 6 à 20 atomes de carbones, substitués par au moins un groupe hydroxyle, et R représente un radical divalent éventuellement substitué, dont la chaîne principale comprend de 6 à 20 atomes de carbone et au moins un groupe amide et/ou ester.

De préférence, Ar1 et Ar2 sont un noyau benzène ou un système de noyaux aromatiques condensés de 6 à

10 atomes de carbone. Il s'agit préférentiellement d'un noyau benzène. Le noyau benzène ou le système de noyaux aromatiques condensés est substitué par au moins un groupe hydroxyle, voire plusieurs groupes hydroxyles.

De préférence, -R- est en position *para* par rapport à un groupe hydroxyle de Ar1 et/ou de Ar2. En outre, Ar1 et/ou Ar2 peuvent être substitués par un ou plusieurs groupes alkyles comprenant de 1 à 10 atomes de carbone, de préférence en une ou des positions ortho par rapport au(x) groupe(s) hydroxyle(s) de Ar1 et/ou Ar2.

Préférentiellement, Ar1 et Ar2 sont des groupes 3,5-dialkyl-4-hydroxyphényle et mieux encore des groupes 3,5-di-*tert*-butyl-4-hydroxyphényle.

De préférence, leur radical divalent -R- possède la formule générale suivante (II):

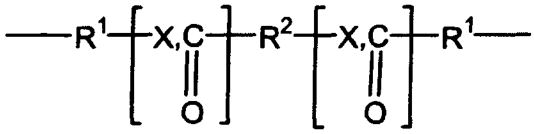

**(II)**

où

- $R^1$ représente un groupe alkylène en $C_1$-$C_4$,
- $R^2$ représente une simple liaison ou un groupe alkylène éventuellement substitué dont la chaîne principale comprend de 1 à 10 atomes de carbone,

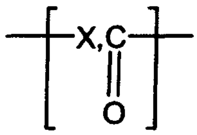

représente

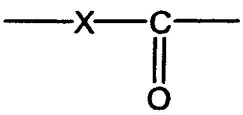

ou

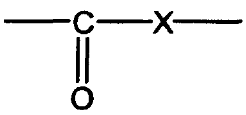

- et X représente un groupement divalent NH ou un atome d'oxygène.

Préférentiellement, le groupe $R^1$ est un groupe éthylène et indépendamment, le groupe $R^2$ est une simple liaison covalente ou un groupe n-hexylène. Lorsque $R^2$ est substitué, il peut s'agir d'un ou plusieurs substituant tel que les groupes alkaryles ou aralkyles, porteurs d'un groupe de type Ar1 et/ou Ar2.

De préférence, l'additif de soufflage chimique est le 2',3-bis[[3-[3,5-di-tert-butyl-4-hydroxyphenyl]propionyl]]propionohydrazide.

L'additif de soufflage représente de 0,4 à 5,0% en poids par rapport au poids de bitume. Selon un ordre de préférence croissant, l'additif de soufflage représente au moins 0,4%, 0,5% ou 0,8% en poids par rapport au poids de bitume, et indépendamment, selon un ordre de préférence croissant, au plus 5,0%, 2,0% ou 1,0% en poids par rapport au poids de bitume. Une quantité inférieure à 0,1% en poids d'additif pourrait être insuffisante pour obtenir une base bitume selon l'invention, tandis qu'une quantité supérieure à 5,0% en poids d'additif n'est pas nécessaire, car l'additif agit à faible dose. Selon une mise en oeuvre préférée, l'additif de soufflage chimique représente de 0,4% à 1,5% en poids rapporté au poids du bitume, et mieux encore, de 0,5 à 1,0% en poids rapporté au poids du bitume.

Au cours du procédé de préparation selon l'invention, on porte le bitume à une température comprise de 120°C à 300°C et on le maintient à une température comprise dans cette plage. Dans de nombreux cas, comme cela sera illustré par les exemples, une température comprise entre 150°C et 180°C est suffisante pour obtenir une base bitume. Du point de vue du procédé, un avantage de l'invention, par rapport au procédé de soufflage usuel est qu'il n'est pas essentiel de contrôler la température. En effet, au cours d'un procédé de soufflage usuel, les réactions d'oxydation qui se produisent sont exothermiques. Cela peut donc conduire à une surchauffe préjudiciable au bon fonctionnement de l'unité de soufflage ou à la qualité du bitume soufflé. Le procédé selon l'invention ne présente pas un tel inconvénient.

On introduit l'additif de soufflage chimique de préférence sous forme de poudre dans le bitume ou mélange de bitume chauffé.

En outre, la durée de mélange est réduite : le mélange du bitume et de l'additif de soufflage chimique est réalisé

sur une durée d'au moins quelques minutes, par exemple 5 à 10 minutes et de préférence au moins 15 minutes, en fonction du volume de bitume traité. Généralement, le mélange peut être mené en moins d'une heure, voire moins de 45 minutes ou même de 30 minutes, en fonction du volume de bitume traité.

Les conditions de mélange, en particulier les conditions d'agitation, influent peu sur le bon déroulement du procédé. On peut réaliser le mélange à l'aide d'une ancre, d'une hélice, d'une hélice centripète, d'une turbine à haut cisaillement, etc...

On obtient à l'issu du procédé une base bitume qui présente certaines caractéristiques d'un bitume soufflé. En particulier, elle est durcie par rapport au bitume de départ. En outre, la pénétrabilité à l'aiguille $P_{25}$ diminue par rapport à celle du bitume de départ et la TBA augmente par rapport à celle du bitume de départ. En revanche, contrairement au cas d'un bitume soufflé, les propriétés à basse température de la base bitume, tel que le point de Fraass, ne se dégradent pas. En outre, les bitumes de type soufflés présentent un meilleur comportement au vieillissement, comme cela va être illustré dans les exemples à l'aide du test RTFOT. Par ailleurs, l'additif de soufflage chimique n'affecte pas la viscosité de la base bitume, par rapport à celle du bitume de départ, aux températures de mise en oeuvre (i.e. les températures d'utilisation, par exemple sur un chantier routier).

Ainsi, l'invention concerne également une base bitume obtenue à l'issu d'un procédé tel que décrit ci-dessus, qui possède les caractéristiques suivantes :

- pénétrabilité à l'aiguille à 25°C (P25), mesurée selon la norme NF EN 1426, comprise entre 20 et 300 dixièmes de millimètres, de préférence entre 50 et 300 dixièmes de millimètres,
- température de ramollissement bille et anneau (TBA) : mesurée selon la norme NF EN 1427, comprise entre 70 et 120°C,
- préparée sans adjonction de polymère.

Le procédé selon l'invention permet d'obtenir les grades de bitume indiqués ci-dessus, qui auparavant nécessitaient l'utilisation de polymères.

En d'autres termes, l'invention vise une base bitume comprenant un bitume non modifié et au moins additif de soufflage chimique possédant la formule générale suivante :

$$Ar1\text{-}R\text{-}Ar2 \qquad (I)$$

où Ar1 et Ar2 représentent indépendamment l'un de l'autre un noyau benzène ou un système de noyaux aromatiques condensés de 6 à 20 atomes de carbones, substitués par au moins un groupe hydroxyle, et R représente un radical divalent éventuellement substitué, dont la chaîne principale comprend de 6 à 20 atomes de carbone et au moins un groupe amide et/ou ester.

L'additif de soufflage chimique est défini plus précisément ci-dessus dans la description. Une telle base bitume est préparée à partir d'un bitume de départ non modifié, c'est-à-dire qu'il ne contient pas de polymère.

Comme on le verra dans les exemples, il est particulièrement intéressant d'obtenir une base bitume durcie dont les qualités de mise en oeuvre ne sont pas affectées par le durcissement aux températures d'usage. En effet, le fait de durcir un bitume dégrade généralement la maniabilité à chaud dudit bitume, c'est-à-dire notamment que sa viscosité à chaud augmente. Or les bases bitumes obtenues conformément à l'invention sont durcies, comme en témoigne une diminution de la pénétrabilité à 25°C, mais leur viscosité à 160°C est comparable à celle du bitume de départ. Cela signifie qu'il ne sera pas nécessaire de "surchauffer" la base bitume pour aboutir à une viscosité suffisamment basse pour la mise en oeuvre.

Cela est intéressant tant pour les applications à chaud que pour les applications à froid. Par exemple, pour la mise en émulsion d'une base bitume obtenue conformément à l'invention, il sera inutile de "surchauffer" la base bitume lors de la fabrication et la mise en oeuvre de la composition bitumineuse comprenant une telle base bitume, malgré le fait qu'elle soit durcie aux températures d'usage.

Un avantage supplémentaire de l'invention réside dans la possibilité d'utiliser un grade de bitume mou pour des applications qui nécessitent actuellement un grade de bitume plus dur. En effet, la base bitume obtenue à l'issue du procédé selon l'invention sera durcie. Elle pourra donc répondre aux spécifications relatives aux températures d'usage. En outre, le fait d'utiliser un bitume mou permettra une fabrication et une mise en oeuvre à des températures plus basses que celles qui étaient nécessaires auparavant en raison de l'utilisation d'un bitume plus dur.

La base bitume selon l'invention peut-être utilisée de la même manière qu'un bitume soufflé usuel, dans des applications routières et/ou industrielles. Ainsi, il peut servir à la préparation d'un liant bitumineux tel qu'une émulsion bitumineuse, un bitume fluxé, ou un bitume polymère.

Les bitumes fluxés sont des compositions de bitume(s) obtenues à partir de bitumes purs dont on a abaissé la viscosité par addition de solvants volatils. Les catégories les plus visqueuses de bitumes fluxés sont généralement réservées aux enduits superficiels, tandis que les plus fluides sont généralement utilisées pour l'imprégnation, la stabilisation des sols, pour la fabrication des émulsions et la préparation des enrobés à froid stockables.

Les bitumes fluidifiés sont obtenus par mélange de liants bitumineux avec des huiles carbochimiques ou pétrolières. Les bitumes fluxés diffèrent des bitumes fluidifiés, en particulier par la courbe de distillation de leurs fluxants, plus étendue vers le haut essentiellement.

Les émulsions de bitume sont une autre forme d'application des bitumes permettant d'accéder à des formes liquides fluides manipulables à froid (c'est-à-dire par exemple à une température de l'ordre de 60 à 80°C). Ces émulsions sont obtenues en dispersant le bitume en globules de quelques microns de diamètre, dans une phase aqueuse additionnée d'émulsifiants. Les émulsions comprennent les émulsions anioniques (les premières connues) ainsi que les émulsions cationiques qui représentent actuellement la majorité des fabrications. Dans chacune de ces catégories, les émulsions se distinguent par la teneur en liant bitumineux, la vitesse de rupture et la viscosité.

Selon la terminologie adoptée dans le cadre du présent exposé, les liants bitumineux fluidifiés et les liants bitumineux fluxés sont regroupés dans une seule et même catégorie, les termes "fluxés" et "fluidifiés" étant ainsi considérés comme synonymes.

Traditionnellement, les bitumes fluxés sont obtenus par mélange, par exemple à 150°C, d'une part, de liant bitumineux, et d'autre part, de fluxant. De manière générale, on connaît les fluxants d'origine pétrolière et les fluxants végétaux.

Il est également possible d'ajouter un polymère dans la base bitume obtenue à l'issu du procédé selon l'invention. Cela n'est pas incompatible avec la caractéristique selon laquelle la base bitume est préparée sans l'adjonction de polymère. En effet, les caractéristiques de pénétrabilité à l'aiguille et de TBA mentionnées sont celles de la base bitume obtenue à l'issu du procédé, avant l'adjonction éventuelle d'un polymère.

A titre d'exemples de polymères pour bitume, on peut citer les élastomères tels que les copolymères SB, SBS, SIS, SBS*, SBR, EPDM, polychloroprène, polynorbomène et éventuellement les polyoléfines tels que les polyéthylènes PE, PEHD, le polypropylène PP, les plastomères tels que les EVA, EMA, les copolymères d'oléfines et d'esters carboxyliques insaturés EBA, les copolymères polyoléfines élastomères, les polyoléfines du type polybutène, les copolymères de l'éthylène et d'esters de l'acide acrylique, méthacrylique ou de l'anhydride maléique, les copolymères et terpolymères d'éthylène et de méthacrylate de glycydile les copolymères éthylène-propylène, les caoutchoucs, les polyisobutylènes, les SEBS, les ABS.

| | |
|---|---|
| SB | copolymère à blocs du styrène et du butadiène |
| SBS | copolymère à blocs styrène- butadiène-styrène |
| SBS* | copolymère à blocs styrène- butadiène-styrène en étoile |
| EVA | copolymère polyéthylène-acétate de vinyle |
| EBA | copolymère polyéthylène-acrylate de butyle |
| PE | polyéthylène |
| EPDM | éthylène propylène diène modifié |
| SIS | styrène-isoprène-styrène |
| EMA | copolymère polyéthylène-acrylate de méthyle |
| SEBS | copolymère du styrène, de l'éthylène, du butylène et du styrène |
| ABS | acrylonitrile-butadiène-styrène |
| PEHD | polyéthylène haute densité |
| SBR | styrène-b-butadiène-rubber |

D'autres agents peuvent être ajoutés à la base bitume selon l'invention. Il s'agit par exemple d'agents de vulcanisation et/ou d'agents de réticulation susceptibles de réagir avec un polymère, lorsqu'il s'agit d'un élastomère et/ou d'un plastomère fonctionnalisé.

Parmi les agents de vulcanisation, on peut citer ceux à base de soufre et ses dérivés, utilisés pour réticuler un élastomère à des teneur de 0,01% à 30% par rapport au poids d'élastomère. De préférence, lorsque l'on emploie un polymère dans la base bitume, on utilise conjoitement au moins un agent de vulcanisation à base de soufre ou de ses dérivés.

Parmi les agents de réticulation, on peut citer les agents de réticulation cationiques tels que les mono ou poly acides, ou anhydride carboxyliques, les esters d'acides carboxyliques, les acides sulfoniques, sulfurique, phosphoriques, voire les chlorures d'acides, les phénols, à des teneurs de 0,01% à 30% par rapport au polymère. Ces agents sont susceptibles de régir avec l'élastomère et/ou le plastomère fonctionnalisé. Ils peuvent être utilisés en complément ou en remplacement des agents de vulcanisation.

Citons parmi ces agents de réticulation cationiques, à titre d'exemples non limitatifs

- acides carboxyliques tels que les acides 4,4'dicarboxydiphényléther, sébacique,
- anhydrides tels que phtalique, oxydiphtalique, triméllitique, téréphtalique

- ester butyliques - acides des anhydrides phtalique ou oxydiphtalique,
- acides sulfoniques tels que les acides para toluène sulfonique, naphtalène sulfonique ou disulfonique, méthane sulfonique, 1 hexane sulfonique,
- acide phosphoniques tels que les acides benzène phosphonique, tert-butyl phosphoniques,
- acides phosphoriques tels que les acides phosphorique, polyphosphorique et alkyl phosphoriques tels que l'acide dodécylphosphorique ou encore diéthylphosphorique ou encore glycérophosphorique, ou même arylphosphoriques comme l'acide phénylphosphorique.

**EXEMPLES**

L'invention est illustrée par les exemples suivants donnés à titre non limitatif. Les caractéristiques rhéologiques et mécaniques des bitumes ou des compositions bitume-additif auxquelles on fait référence dans ces exemples sont mesurées de la façon indiquée dans le tableau 1.

Par ailleurs, la viscosité Brookfield est exprimée en mPa.s. La viscosité est mesurée au moyen d'un viscosimètre Brookfield CAP 2000+. Elle est mesurée à 160°C et à différentes vitesses de rotation (100 tr/min, 500 tr/min, 750 tr/min et 1000 tr/min). La lecture de la mesure est réalisée après 30 secondes pour chaque vitesse de rotation.

Le module complexe est mesuré au moyen d'un rhéomètre Rheometric Scientific RDA2. Il est mesuré à 10°C et 60°C et à la fréquence de 7,8 Hz.

Les produits mis en oeuvre dans ces exemples sont :

- Bitumes : ce sont des bitumes commercialisés par Total France.
- Additif de soufflage chimique : il s'agit de composés phénoliques comportant des fonctions hydrazides. En particulier, le 2', 3-bis[[3-[3, 5-di-tert-butyl-4-hydroxyphenyl]propionyl]]propionohydrazide est utilisé. Il est désigné comme additif A.

**Exemple 1 : Préparation d'une composition bitume + additif A à partir de bitumes de différentes origines.**

Ce premier exemple concerne des compositions bitume + additif A selon l'invention. Cinq bitumes d'origines différentes, ont été utilisés dans cet exemple. Leurs caractéristiques respectives sont indiquées dans le tableau 2 ci-dessous.

Les préparations sont réalisées à 170°C, dans un réacteur sous agitation. On introduit 99% en poids d'un bitume dans le réacteur. Ensuite, on ajoute 1% en poids d'additif A dont le point de fusion est compris entre 221 et 232°C. Les mélanges sont agités pendant environ 15 minutes. Leur aspect final est homogène.

TABLEAU 2

| | **Avant ajout d'additif** | | | | |
|---|---|---|---|---|---|
| | Bitume A | Bitume B | Bitume C | Bitume D | Bitume E |
| Origine | Amérique Centrale | Moyen Orient | CEI | Moyen Orient | Moyen Orient |
| $P_{25}$ (1/10mm) | 200 | 153 | 187 | 55 | 169 |
| TBA | 40 | 40,6 | 40,7 | 50 | 39,8 |
| | **Ajout de 1% d'additif A** | | | | |
| $P_{25}$ (1/10mm) | 40 | 54 | 71 | 28 | 57 |
| TBA | 98 | 100 | > 100 | 110 | 111,8 |

Comme le montrent les résultats de cet exemple, quelle que soit l'origine du bitume de départ, l'action de l'additif est équivalente. Elle se caractérise par une diminution de la pénétrabilité $P_{25}$ et une augmentation de la TBA. Cette action est similaire à celle que l'on peut observer par soufflage usuel d'un bitume.

Ces résultats sont illustrés aux figures 1 et 2. La figure 1 montre qu'à partir d'une certaine teneur en additif, la TBA est pratiquement doublée, pour deux grades de bitumes (figuré diamant: grade 70/100 RN ; figuré carré: grade 160/220 RN). La figure 2 montre que la TBA et la pénétrabilité à 25°C de deux grades de bitumes différents (figuré rond : grade 50/70 ; figuré triangulaire : grade 160/220) sont modifiées. La TBA est pratiquement doublée, voire triplée, tandis que la pénétrabilité à 25°C diminue. On aboutit donc dans les deux cas à un bitume durci par rapport au bitume de départ. En outre, il semblerait que l'effet de durcissement soit plus important pour un bitume mou.

**Exemple 2 : Préparation d'une composition bitume + additif A.**

Cet exemple concerne des compositions bitume + additif A selon l'invention. Il illustre la rapidité d'action de l'additif ainsi que son effet bénéfique sur la viscosité à 160°C et le point de fragilité Fraass.

Cette préparation est réalisée à 160°C, dans un réacteur, sous agitation. On introduit 99,1% en poids d'un bitume C de pénétrabilité à 25°C de 187 1/10 mm et de température de ramollissement bille et anneau de 40.7°C dans le réacteur. Ensuite, on ajoute 0,9% en poids d'additif A dont le point de fusion est compris entre 221 et 232°C. Le mélange est agité pendant 20 minutes, 40 minutes ou 1 heure. Le mélange obtenu a un aspect homogène. On considère généralement qu'une variation de viscosité inférieure à 10% n'est pas significative. Les caractéristiques sont mesurées après les différents temps d'agitation et reportée dans le tableau 3 ci-dessous.

TABLEAU 3

| | Bitume C | Bitume C + 0.9% additif | | |
|---|---|---|---|---|
| Température | | 160°C | 160°C | 160°C |
| Temps d'agitation | | 20 min | 40 min | 1 heure |
| | | | | |
| $P_{25}$ (1/10mm) | 187 | 71 | 70 | 70 |
| TBA (°C) | 40,7 | > 100 | 106 | 106 |
| PI | -0,04 | | 8,15 | 8,15 |
| PFF (°C) | -19 | -19 | -17 | -17 |
| Viscosité Brookfield à 160°C (mPa.s) | | | | |
| 500 tr/min | 75,4 | | | 76,6 |
| 750 tr/min | 73,3 | 73,2 | 73,5 | 75,3 |
| 1000 tr/min | 71,4 | | 73,5 | |

Cet exemple montre bien que la viscosité à 160°C et le point de fragilité Fraas sont inchangés entre le bitume de départ et la base bitume obtenue après additivation, quelle que soit la durée du mélange. Ainsi, la maniabilité à chaud de la base bitume obtenue après additivation est comparableà celle du bitume de départ.

**Exemple 3 : Préparation d'une composition bitume + additif A.**

Cet exemple concerne des compositions bitume + additif A selon l'invention. Il illustre l'influence du grade du bitume de départ et l'effet d'un vieillissement simulé par un test RTFOT.

Les préparations sont réalisées à 170°C, dans un réacteur sous agitation. On introduit 99% en poids d'un bitume dans le réacteur. Ensuite, on ajoute 1 % en poids d'additif A dont le point de fusion est compris entre 221 et 232°C. Les mélanges sont agités pendant environ 15 minutes. Leur aspect final est homogène. Leurs propriétés sont reportées dans le tableau 4. On évalue en particulier l'adhésivité passive de la base bitume par rapport à différents types de granulats.

TABLEAU 4

| | Bitume D | Bitume D + 1% additif | Bitume E | Bitume E + 1% additif |
|---|---|---|---|---|
| $P_{25}$ (1/10 mm) | 55 | 28 | 169 | 57 |
| TBA (°C) | 50 | 110 | 39,8 | 111,8 |
| IP | -0,99 | 6,16 | -0,87 | 8,07 |
| PFF (°C) | | -11 | | -15 |
| Viscosité Brookfield (mPa.s) (1) | | | | |
| | 203 | 188 | 135 | 128 |
| Module complexe G* (Pa) (2) | | | | |
| 10°C | $1,9 \times 10^7$ | $3,2 \times 10^7$ | $4,1 \times 10^6$ | $1,5 \times 10^7$ |

(suite)

| | Bitume D | Bitume D + 1% additif | Bitume E | Bitume E + 1% additif |
|---|---|---|---|---|
| 60°C | 1,0 x $10^4$ | 1,8 x $10^5$ | 2,6 x $10^3$ | 1,4 x $10^5$ |
| Adhésivité passive (%) | | | | |
| Diorite | | 100 | | 100 |
| Quartzite | | 100 | | 100 |
| Calcaire | | 100 | | 100 |
| Silex | | 100 | | 100 |
| **Après vieillissement RTFOT** | | | | |
| $P_{25}$ (1/10 mm) | | | 102 | 47 |
| $PR_{25}$ (%) (3) | | | 60,3 | 82,4 |
| TBA (°C) | | | 44,4 | 106,8 |
| Δ TBA (°C) (4) | | | 4,6 | -5 |
| IP | | | 0,9 | 7,1 |
| (1) Viscosité Brookfield à 160°C et 100 tr/min (mPa.s)<br>(2) Module complexe G* mesuré à 7.8 Hz (Pa)<br>(3) Pénétrabilité résiduelle $PR_{25}$ = $P_{25}$ après RTFOT / $P_{25}$ avant RTFOT x 100 exprimée en %<br>(4) Variation de la température de ramollissement bille et anneau exprimée en °C, Δ TBA = TBA après RTFOT - TBA avant RTFOT | | | | |

Avec les deux bitumes D et E, on observe une diminution de la pénétrabilité et une augmentation de la TBA associée à l'additivation. De plus, cet exemple montre que le module complexe du bitume augmente lorsqu'il est additivé.

Le vieillissement du bitume est simulé par le test normalisé RTFOT. Généralement, en vieillissant, un bitume durcit : sa pénétrabilité à l'aiguille diminue tandis que sa température de ramollissement bille et anneau augmente.

La pénétrabilité résiduelle, exprimée en pourcentage, est le rapport entre la pénétrabilité à l'aiguille à 25°C ($P_{25}$) après vieillissement simulé par le test RTFOT et la $P_{25}$ avant le test RTFOT. Plus elle est importante, meilleure est la résistance du bitume au vieillissement. Par ailleurs, plus la variation de la température de ramollissement est faible, meilleure est la résistance du bitume au vieillissement.

Le test RTFOT montre que la pénétrabilité diminue moins dans la base bitume additivée que dans le bitume de départ, après vieillissement simulé. De plus, même après vieillissement simulé, l'indice de pénétrabilité Pfeiffer de la base bitume additivée reste élevé. La pénétrabilité résiduelle du bitume additivé est plus importante que celle du bitume de départ. En outre, la variation de la température de ramollissement TBA est négative pour le bitume additivé. La base bitume additivée est donc moins sensible au vieillissement que le bitume de départ.

Les bases-bitumes additivées présentent une bonne adhésivité passive : on ne constate pas de désenrobage des granulats à l'issue du test d'addhésivité.

Etant données les propriétés de la base bitume additivée, celles-ci constituent des liants aptes aux applications anti-omiérage notamment.

## Revendications

**1.** Procédé de préparation d'une base bitume, comprenant les étapes essentielles suivantes :

◦ a) on introduit un bitume non modifié dans un récipient équipé de moyens de mélange, et on porte le bitume à une température de 120°C à 300°C,
◦ b) puis on introduit, au moins un additif de soufflage chimique dans le récipient, et on mélange, ledit additif de soufflage chimique possédant la formule générale suivante :

Arl-R-Ar2 (I)

où Ar1 et Ar2 représentent indépendamment l'un de l'autre un noyau benzène ou un système de noyaux aromatiques condensés de 6 à 20 atomes de carbones, substitués par au moins un groupe hydroxyle, et R représente un radical divalent éventuellement substitué, dont la chaîne principale comprend de 6 à 20 atomes

de carbone et au moins un groupe amide et/ou ester;

l'additif de soufflage représentant de 0,4 à 5,0 % en poids rapporté au poids de bitume non modifié ;
et dans lequel cette préparation s'effectue sans adjonction de polymère;
la base bitume obtenue présentant une pénétrabilité à l'aiguille à 25°C ($P_{25}$) mesurée selon la norme NF EN 1426 comprise entre 20 et 300 dixièmes de millimètre, et plus particulièrement entre 50 et 300 dixièmes de millimètre, et une température de ramollissement bille et anneau (TBA) mesurée selon la norme NF EN 1427 comprise entre 70 et 120°C.

**2.** Procédé selon la revendication 1, dans lequel Ar1 et/ou Ar2 sont substitués par au moins un groupe alkyle de 1 à 10 atomes de carbone, avantageusement en une ou des positions *ortho* par rapport au(x) groupe(s) hydroxyle(s).

**3.** Procédé selon l'une quelconque revendications précédentes, dans lequel -R- est en position *para* par rapport à un groupe hydroxyle de Ar1 et/ou Ar2.

**4.** Procédé selon l'une quelconque revendications précédentes, dans lequel Ar1 et Ar2 sont des groupes 3,5-dialkyl-4-hydroxyphényle, avantageusement des groupes 3,5-di-*tert*-butyl-4-hydroxyphényle.

**5.** Procédé selon l'une quelconque revendications précédentes dans lequel l'additif est le 2',3-bis[(3-[3, 5-di-*tert*-butyl-4-hydroxyphenyl]propionyl)]propionohydrazide.

**6.** Procédé selon l'une quelconque revendications précédentes, dans lequel le mélange est effectué pendant une durée de 5 minutes à 1 heure.

**7.** Base bitume susceptible d'être obtenue par un procédé comprenant les étapes essentielles suivantes :

◦ a) on introduit un bitume non modifié dans un récipient équipé de moyens de mélange, et on porte le bitume à une température de 120°C à 300°C,
◦ b) puis on introduit au moins un additif de soufflage chimique dans le récipient, et on mélange, ledit additif de soufflage chimique possédant la formule générale suivante :

Arl-R-Ar2 (I)

où Ar1 et Ar2 représentent indépendamment l'un de l'autre un noyau benzène ou un système de noyaux aromatiques condensés de 6 à 20 atomes de carbones, substitués par au moins un groupe hydroxyle, et R représente un radical divalent éventuellement substitué,
dont la chaîne principale comprend de 6 à 20 atomes de carbone et au moins un groupe amide et/ou ester;
l'additif de soufflage représentant de 0,4 à 5,0 % en poids rapporté au poids de bitume non modifié ;
cette base bitume étant préparée sans adjonction de polymère, et présentant une pénétrabilité à l'aiguille à 25°C ($P_{25}$) mesurée selon la norme NF EN 1426 comprise entre 20 et 300 dixièmes de millimètre, et plus particulièrement entre 50 et 300 dixièmes de millimètre, et une température de ramollissement bille et anneau (TBA) mesurée selon la norme NF EN 1427 comprise entre 70 et 120°C.

**8.** Utilisation d'une base bitume selon la revendication 7, dans la préparation d'un liant bitumineux, en particulier une émulsion bitumineuse, un bitume fluxé, ou un bitume polymère.

**9.** Utilisation d'une base bitume selon la revendication 7, dans la préparation d'une association entre un liant bitumineux et des granulats routiers, en particulier enduit superficiel, enrobé à chaud, enrobé à froid, enrobé coulé à froid, grave émulsion, couche de roulement.

**10.** Utilisation d'une base bitume selon la revendication 7, dans la préparation d'un revêtement d'étanchéité, d'une membrane ou d'une couche d'imprégnation.

## Patentansprüche

**1.** Verfahren zum Herstellen einer Bitumenbasis, die folgenden wesentlichen Schritte umfassend:

- a) man bringt ein unverändertes Bitumen in einen Behälter ein, der mit Mischmitteln ausgestattet ist, und man erhitzt das Bitumen auf eine Temperatur von 120°C bis 300°C,
- b) danach bringt man zumindest ein chemisches Treibmittel in den Behälter ein und vermischt es, wobei das besagte chemische Treibmittel die folgende allgemeine Formel aufweist:

Ar1-R-Ar2 (I)

wobei Ar1 und Ar2 unabhängig voneinander einen Benzolkern oder ein System an kondensierten aromatischen Kernen mit 6 bis 20 Kohlenstoffatomen darstellen, die durch zumindest eine Hydroxylgruppe substituiert werden, und R ein eventuell substituiertes divalentes Radikal darstellt, dessen Hauptkette 6 bis 20 Kohlenstoffatome und zumindest eine Amid- und/oder Estergruppe umfasst;
wobei das Treibmittel 0,4 bis 5,0 Gew.-% darstellt, die dem Gewicht des unveränderten Bitumens beigebracht werden;
und wobei diese Herstellung ohne Beigabe eines Polymers erfolgt;
wobei die erhaltene Bitumenbasis, gemäß NF EN 1426 gemessen, eine Nadelpenetration bei 25°C ($P_{25}$) zwischen 20 und 300 Zehntel Millimeter aufweist, und genauer zwischen 50 und 300 Zehntel Millimeter, und einen Erweichungspunkt Ring und Kugel (EP RuK), gemäß NF EN 1427 gemessen, zwischen 70 und 120°C.

**2.** Verfahren nach Anspruch 1, wobei Ar1 und/ oder Ar2 durch zumindest eine Alkygruppe mit 1 bis 10 Kohlenstoffatomen substituiert werden, vorteilshalber in einer oder mehreren *ortho*-Positionen im Verhältnis zur (zu den) Hydroxylgruppe(n).

**3.** Verfahren nach irgendeinem der vorherigen Ansprüche, wobei sich -R- in der *para*-Position im Verhältnis zu einer Hydroxylgruppe von Ar1 und/ oder Ar2 befindet.

**4.** Verfahren nach irgendeinem der vorherigen Ansprüche, wobei Ar1 und Ar2 3,5-Dialkyl-4-hydroxyphenyl-Gruppen, und vorteilshalber 3,5-Di-tert-butyl-4-hydroxyphenyl-Gruppen sind.

**5.** Verfahren nach irgendeinem der vorherigen Ansprüche, wobei das Treibmittel 2',3-Bis[(3-[3,5-Di-*tert*-Butyl-4-hydroxyphenyl]Propionyl)]Propionohydrazid ist.

**6.** Verfahren nach irgendeinem der vorherigen Ansprüche, wobei die Mischung innerhalb einer Dauer von 5 Minuten bis 1 Stunde erfolgt.

**7.** Bitumenbasis, die man durch ein Verfahren erhalten kann, das die folgenden wesentlichen Schritte umfasst:

- a) man bringt ein unverändertes Bitumen in einen Behälter ein, der mit Mischmitteln ausgestattet ist, und man erhitzt das Bitumen auf eine Temperatur von 120°C bis 300°C,
- b) danach bringt man zumindest ein chemisches Treibmittel in den Behälter ein und vermischt es, wobei das besagte chemische Treibmittel die folgende allgemeine Formel aufweist:

Ar1-R-Ar2 (I)

wobei Ar1 und Ar2 unabhängig voneinander einen Benzolkern oder ein System an kondensierten aromatischen Kernen mit 6 bis 20 Kohlenstoffatomen darstellen, die durch zumindest eine Hydroxylgruppe substituiert werden, und R ein eventuell substituiertes divalentes Radikal darstellt, dessen Hauptkette 6 bis 20 Kohlenstoffatome und zumindest eine Amid- und/oder Estergruppe umfasst;
wobei das Treibmittel 0,4 bis 5,0 Gew.-% darstellt, die dem Gewicht des unveränderten Bitumens beigebracht werden;
wobei diese Bitumenbasis ohne Beigabe eines Polymers hergestellt wird und, gemäß NF EN 1426 gemessen, eine Nadelpenetration bei 25°C ($P_{25}$) zwischen 20 und 300 Zehntel Millimeter aufweist, und genauer zwischen 50 und 300 Zehntel Millimeter, und einen Erweichungspunkt Ring und Kugel (EP RuK), gemäß NF EN 1427 gemessen, zwischen 70 und 120°C.

**8.** Verwendung einer Bitumenbasis nach Anspruch 7 bei der Herstellung eines bituminösen Bindemittels, im Speziellen einer bituminösen Emulsion, eines verflüssigten Bitumens oder eines Polymer-Bitumens.

**9.** Verwendung einer Bitumenbasis nach Anspruch 7 bei der Herstellung eines Verbundes zwischen einem bituminösen

Bindemittel und einem Granulat für den Straßenbau, im Speziellen eines Straßenbelagsmaterials, eines heißen Mischguts, eines Kaltmischguts, eines kalt gegossenen Straßenbelags, eines Flüssigasphalts, einer Deckschicht.

**10.** Verwendung einer Bitumenbasis nach Anspruch 7 bei der Herstellung eines Sperrbelags, einer Membran oder einer Iprägnierungsschicht.

**Claims**

**1.** Method for preparing a bitumen base, comprising the following essential steps:

- a) a non-modified bitumen is introduced into a receptacle equipped with mixing means, and the bitumen is raised to a temperature of 120°C to 300°C,
- b) then at least one chemical blowing additive is introduced into the receptacle and mixing is carried out, said chemical blowing additive having the following general formula:

Ar1-R-Ar2 (1)

where Ar1 and Ar2 represent independently of each other a benzene ring or a system of condensed aromatic rings of 6 to 20 carbon atoms, substituted by at least one hydroxyl group, and R represents a divalent radical, optionally substituted, the main chain of which comprises 6 to 20 carbon atoms and at least one amide and/or ester group;
the blowing additive representing 0.4% to 5.0% by weight compared with the weight of non-modified bitumen; and wherein this preparation is carried out without the addition of a polymer;
the bitumen base obtained having a needle penetrability at 25°C ($P_{25}$) measured in accordance with NF EN 1426 of between 20 and 300 tenths of a millimetre, and more particularly between 50 and 300 tenths of a millimetre, and a ring and ball softening point measured in accordance with NF EN 1427 of between 70° and 120°C.

**2.** Method according to claim 1, in which Ar1 and/or Ar2 are substituted by at least one alkyl group of 1 to 10 carbon atoms, advantageously in one or more *ortho* positions with respect to the hydroxyl group or groups.

**3.** Method according to any one of the preceding claims, in which -R- is *in para* position with respect to a hydroxyl group of Ar1 and/or Ar2.

**4.** Method according to any one of the preceding claims, in which Ar1 and Ar2 are 3,5-dialkyl-4-hydroxyphenyl groups, advantageously 3,5-di-*tert*-butyl-4-hydroxyphenyl groups.

**5.** Method according any one of the preceding claims, in which the additive is 2',3-bis[(3-[3,5-di-*tert*-butyl-4-hydroxphenyl]propionyl)propionohydrazide.

**6.** Method according to any one of the preceding claims, in which the mixing is carried out for a period of 5 minutes to 1 hour.

**7.** Bitumen base able to be obtained by a method comprising the following essential steps:

- a) a non-modified bitumen is introduced into a receptacle equipped with mixing means, and the bitumen is raised to a temperature of 120°C to 300°C,
- b) then at least one chemical blowing additive is introduced into the receptacle and mixing is carried out, said chemical blowing additive having the following general formula:

Ar1-R-Ar2 (1)

where Ar1 and Ar2 represent independently of each other a benzene ring or a system of condensed aromatic rings of 6 to 20 carbon atoms, substituted by at least one hydroxyl group, and R represents a divalent radical, optionally substituted, the main chain of which comprises 6 to 20 carbon atoms and at least one amide and/or ester group;
the blowing additive representing 0.4% to 5.0% by weight compared with the weight of non-modified bitumen;

this bitumen base being prepared without the addition of polymer, and having a needle penetrability at 25°C ($P_{25}$) measured in accordance with NF EN 1426 of between 20 and 300 tenths of a millimetre, and more particularly between 50 and 300 tenths of a millimetre, and a ring and ball softening point measured in accordance with NF EN 1427 of between 70° and 120°C.

**8.** Use of a bitumen base according to claim 7, in the preparation of a bituminous binder, in particular a bituminous emulsion, a fluxed bitumen or a polymer bitumen.

**9.** Use of a bitumen base according to claim 7, in the preparation of an association between a bituminous binder and road aggregates, in particular surface coating, hot surfacing, cold surfacing, surfacing poured cold, emulsion gravel or road carpet.

**10.** Use of a bitumen base according to claim 7, in the preparation of an apron, a membrane or an impregnation layer.

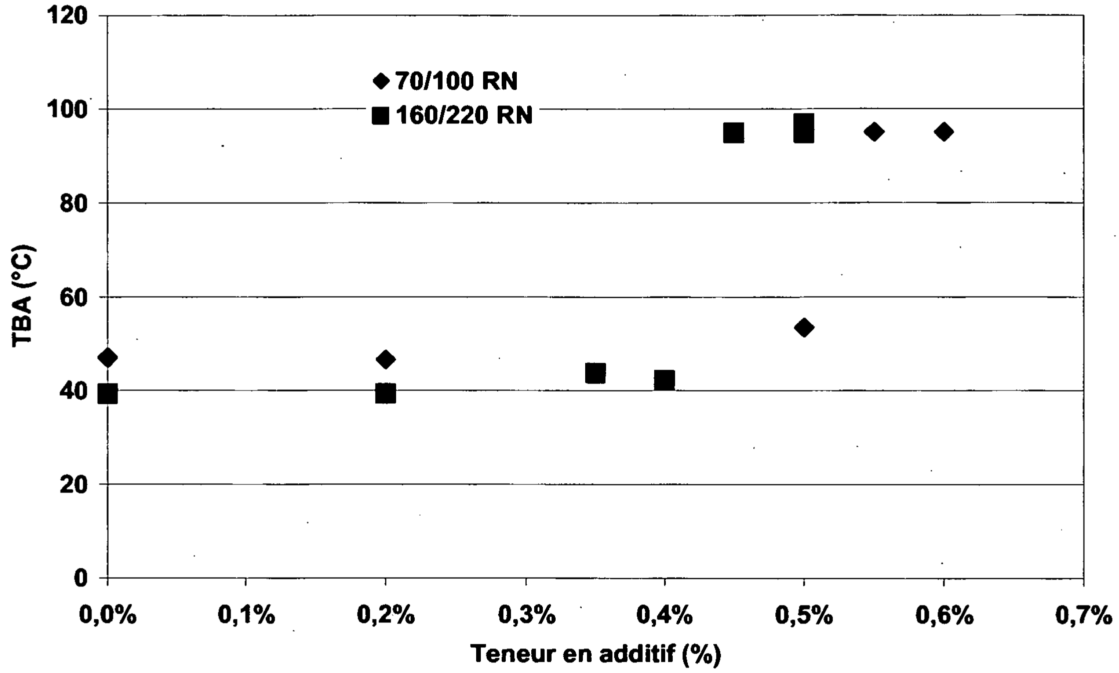
120
100
80
60
40
20
0
TBA (°C)
70/100 RN
160/220 RN
0,0%
0,1%
0,2%
0,3%
0,4%
0,5%
0,6%
0,7%
Teneur en additif (%)

FIG. 1

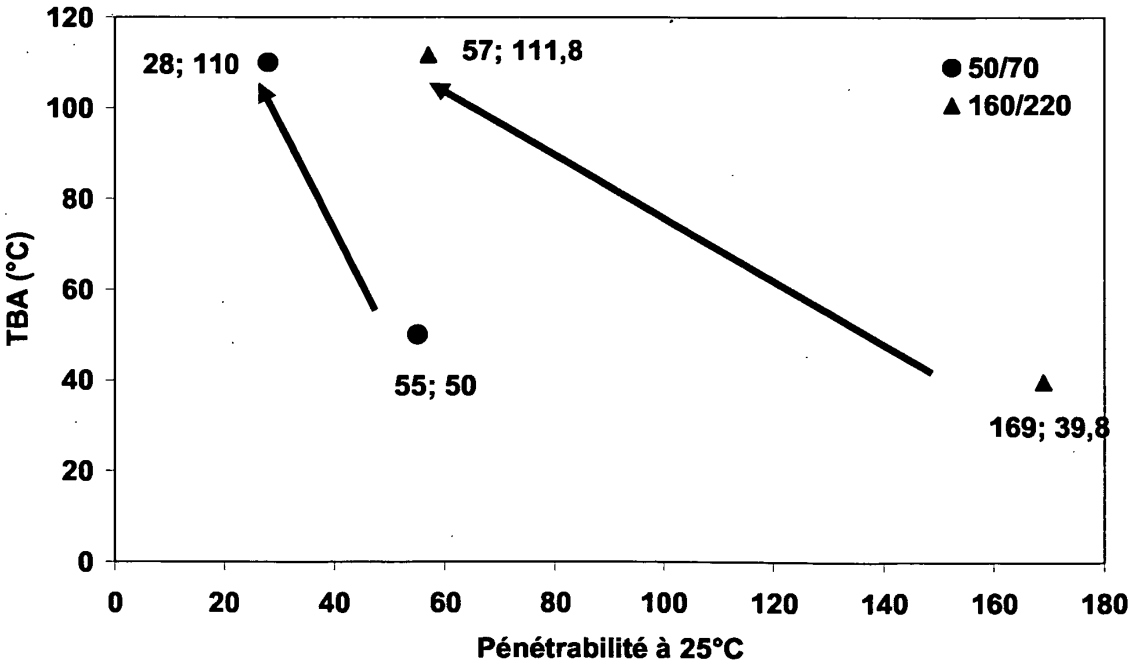
120
100
80
60
40
20
0
TBA (°C)
28; 110
57; 111,8
50/70
160/220
55; 50
169; 39,8
0
20
40
60
80
100
120
140
160
180
Pénétrabilité à 25°C

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 0226889 A1
- US 4440886 A
- US 4755545 A